# EUROPÄISCHE PATENTANMELDUNG

(11) **EP 0 952 283 A2**
(43) Veröffentlichungstag der Anmeldung: **27.10.1999**
(21) Anmeldenummer: 99106719.0
(22) Anmeldetag: 01.04.1999
(51) Int. Cl.: E05B 49/00

(54) **Fernbedienungssystem zum Ansteuern für an Fahrzeugen befindlichen Zugangs-Kontrolleinrichtungen**

(30) Priorität: 23.04.1998 DE 19818158
(71) Anmelder: HUF HÜLSBECK & FÜRST GMBH & CO. KG, 42551 Velbert (DE)
(72) Erfinder: Steegmann, Bernd, 42579 Heiligenhaus (DE)
(74) Vertreter: Mentzel, Norbert, Dipl.-Phys.

(57) **Zusammenfassung**

Die Erfindung richtet sich auf ein Fernbedienungssystem(10), das aus einem tragbaren Sender (11) und einem stationären Empfänger (12) besteht, der in einem zugehörigen Fahrzeug untergebracht ist. Um ein zuverlässiges Ansteuern von Zugangs-Kontrolleinrichtungen im Fahrzeug unabhängig von äußeren Einflüssen zu gewährleisten, wird vorgeschlagen, den tragbaren Sender mit zwei Betriebsarten auszustatten, nämlich einer Standard-Betriebsart und einer Sonder-Betriebsart. In die Sonder-Betriebsart wird nur dann gewechselt, wenn in der Standard-Betriebsart der Sender keine Verbindung mit dem Empfänger am Fahrzeug aufnehmen kann. In der Sonder-Betriebsart werden die Signale des Senders entweder verstärkt, vervielfacht oder es wird die Sendefrequenz gewechselt bzw. die Modulationsart geändert. Der Wechsel von der Standard-Betriebsart in die Sonder-Betriebsart geschieht entweder manuell durch Betätigung einer Taste (13) am Sender oder automatisch durch den Empfang eines Kennungssignals, das vom Fahrzeug abgegeben wird.

## Beschreibung

Die Erfindung richtet sich auf ein Fernbedienungssystem der im Oberbegriff des Anspruches 1 angegebenen Art. Es umfasst einerseits einen transportablen Sender, welcher zweckmäßigerweise im Griff eines Fahrzeugschlüssels untergebracht ist und andererseits einen in einem zugehörigen Fahrzeug angeordneten stationären Empfänger. Durch das vom Sender abgestrahlte Sendesignal, beispielsweise durch Drücken eines senderseitigen Betätigungsschalters, wird an den Empfänger eine Information übertragen, um im oder am Fahrzeug einen gewünschten Mechanismus, beispielsweise das Entriegeln der Fahrzeugtüren oder das Entsichern der Wegfahrsperre auszulösen.

Solche Fernbedienungssysteme haben sich zwar bewährt, doch ergeben sich in zunehmendem Maße Probleme bei der Übertragung des Signals vom Sender zum Empfänger. Aufgrund der großen Einsatzmöglichkeiten ist es zu einer starken Zunahme derartiger Fernbedienungssysteme, die im MHz-Bereich, beispielsweise im ISM-Kanal 433 MHz arbeiten, gekommen. Auf diesen Kanälen können Datenübertragungsstrecken mit Reichweiten von mehr als 1000 Meter realisiert werden. Hinzu kommt, dass derartige Fernbedienungssysteme nicht nur im gewerblichen Bereich sondern von jedermann käuflich erworben und für den privaten Bereich eingesetzt werden können. Die gesetzlich zulässige Sendeleistung liegt beispielsweise in Deutschland bei 20 mW/+13dBm, wobei die typische Sendeleistung für Fahrzeuge bei ca. 20 µW/-23dBm angesetzt wird.

Dies führt zu Unsicherheiten in der Bedienung des Systems, da die entsprechenden Funkkanäle einerseits durch eine wachsende Anzahl von Benutzern und andererseits durch Funkstörungen jeder Art, beispielsweise durch stärkere Sender, zumindest zeitweise derart blockiert werden, dass in bestimmten Situationen eine Bedienung der Empfangs/Decodiereinrichtung nicht mehr möglich ist. Dieser Mangel an Zuverlässigkeit lässt sich auch dann nicht beheben, wenn der Sender mit einer größeren Sendeleistung ausgestattet wird Dies hätte zwar zur Folge, dass prinzipiell eine größere Reichwerte erzielt werden könnte, doch ist dies für den normalen Einsatz nicht erwünscht, da aufgrund fehlender visueller Kontrolle über die Betätigung Fehlbedienungen und somit mögliche Personen oder Sachschäden nicht auszuschließen sind. Zudem hat die Erhöhung der Sendeleistung einen größeren Energieverbrauch zur Folge, der entweder einen größeren Energiespeicher erforderlich macht oder die Betriebsdauer der Fernbedienung verkürzt.

Der Erfindung liegt die Aufgabe zugrunde, ein Fernbedienungssystem der im Oberbegriff des Anspruches 1 angegebenen Art zu entwickeln, dass unabhängig von äußeren Einflüssen eine zuverlässige Funkverbindung zwischen Sender und Empfänger sicherstellt. Dies wird erfindungsgemäß durch die im kennzeichnenden Teil des Anspruches 1 genannten Maßnahmen erreicht, denen folgende besondere Bedeutung zukommt.

Die Erfindung unterscheidet zwischen mindestens zwei Betriebsarten, in denen der Handsender die Signale aussendet, nämlich eine Standard-Betriebsart und eine Sonder-Betriebsart. Die Standard-Betriebsart ist der Normalzustand des Handsenders. Die Signale des Handsenders können entweder manuell, durch Betätigung des Benutzers, oder, automatisch durch ein vom Fahrzeug abgegebenes Kennungssignal, ausgelöst und an den Empfänger am Fahrzeug gesendet werden.

Die Wahl der Betriebsart ist bei der manuellen Betätigung davon abhängig, ob innerhalb des Zeitfensters eine bestimmte Anzahl von Betätigungen, beispielsweise das Drücken der Betätigungstaste des Senders erfolgt. Wird der Befehl nur einmal eingegeben, erfolgt die Signalübertragung in der Standard-Betriebsart Durch Wiederholung des Befehls innerhalb des Zeitfensters wechselt der Handsender in die Sonder-Betriebsart, wobei beispielsweise die Sendeleistung zur Übertragung des Sendesignals deutlich erhöht werden kann. Mit der Erhöhung der Sendeleistung steigt die Wahrscheinlichkeit, dass das Signal den Empfänger erreicht und somit der gewünschte Mechanismus am Fahrzeug eingeleitet wird. Möglich ist auch, in der Sonder-Betriebsart die Sendefrequenz zu wechseln oder die Modulationsart zu ändern. Die hierbei genannten Maßnahmen zielen also darauf ab, die Zuverlässigkeit des Fernbedienungssystems deutlich zu erhöhen. Das Wechseln von der Standard-Betriebsart in die Sonder-Betriebsart erfolgt bewusst oder unbewusst vom Benutzer durch die mehrfache Betätigung des Befehls innerhalb des typischen Zeitfensters. Bei Betätigung außerhalb des Zeitfensters arbeitet der Sender in der Standard-Betriebsart, beispielsweise mit normaler Sendeleistung.

Bei der automatischen Signalauslösung ist zunächst der Empfang des fahrzeugseitigen Kennungssignals notwendig. Dies geschieht, wie bei der manuellen Betätigung in der Standard-Betriebsart. Wird der Handsender auch nach dem Senden weiterhin vom Fahrzeug angerufen, ist dies für den Handsender ein Indiz dafür, dass die Antwort nicht korrekt empfangen wurde. Um die im Fahrzeug befindlichen Zugangskontrolleinrichtungen ansteuern zu können, schaltet der Handsender nun automatisch in die Sonder-Betriebsart um, wobei in analoger Weise wie bei der manuellen Betätigung die bereits oben genannten Maßnahmen realisiert werden.

Durch den Einsatz zweier Betriebsarten ist es somit möglich, trotz störender äußerer Einflüsse eine zuverlässige Übertragung der Sendesignale zu gewährleisten. Weitere Maßnahmen und Vorteile der Erfindung ergeben sich aus den Unteransprüchen, der nachfolgenden Beschreibung und den Zeichnungen. In den Zeichnungen ist die Erfindung in zwei Ausführungsbeispielen dargestellt. Es zeigen:
- Fig. 1: die Funktionsweise des erfindungsgemäßen Fernbedienungssystems mit manueller Betätigung,
- Fig. 2: eine weitere Funktionsweise des in Fig. 1 dargestellten Fernbedienungssystems,
- Fig. 3: die Funktionsweise des Fernbedienungssystem mit automatischer Betätigung.

Das erfindungsgemäße Fernbedienungssystem 10 setzt sich aus zwei Hauptbestandteilen, nämlich einem Sender 11 und einem Empfänger 12, zusammen. Der Sender 11 ist transportabel in Form eines Handsenders ausgebildet, der beispielsweise in einem Griff eines Fahrzeugschlüssels untergebracht ist. Denkbar ist aber auch ein separates Gehäuse, das mit einem Ring an einem Schlüsselbund befestigt werden kann. Der Empfänger 12 ist in einem Fahrzeug untergebracht und dort in der Regel fest installiert. Um ein Signal vom Sender 11 zum Empfänger 12 aussenden zu können, muss ein am Sender 11 befindlicher Betätigungsschalter 13 betätigt werden. Das vom Sender 11 ausgesendete Signal besteht vorteilhafterweise aus elektromagnetischen Wellen, jedoch sind auch andere Übertragungsmedien wie Schallwellen denkbar. Die ausgesendeten Signale enthalten verschlüsselte Informationen, die vom Empfänger 12 entschlüsselt werden und dem Ansteuern von Steuereinheiten, beispielsweise das Entriegeln der Fahrzeugtüren dienen.

Das Fernbedienungssystem 10 weist nun die Besonderheit auf, dass der Handsender 11 in zwei unterschiedliche Betriebsarten einsetzbar ist. Die eine Betriebsart, nämlich die Standard-Betriebsart, ist für den Normalbetrieb vorgesehen und stellt den Grundzustand des Handsenders 11 dar. Der Normalbetrieb liegt dann vor, wenn ein bestimmter Befehl durch eine einmalige Betätigung des Betätigungsschalters 13 ein Sendesignal 14 zum Empfänger 12 übertragen wird. Die Folge ist, dass der Empfänger 12 das codierte Signal 14 decodiert und somit die gewünschte Steuereinheit am Fahrzeug angesteuert wird. Diese reibungslose Übertragung des Sendesignals 14 ist aber nur dann möglich, wenn keine störenden Einflüsse, beispielsweise Funkstörungen von anderen leistungsstärkeren Sendern die Übertragung blockieren. Das Ansteuern der Zugangskontrolleinrichtungen am Fahrzeug mittels der Fernbedienung 10 ist dann in der Standard-Betriebsart nicht mehr möglich.

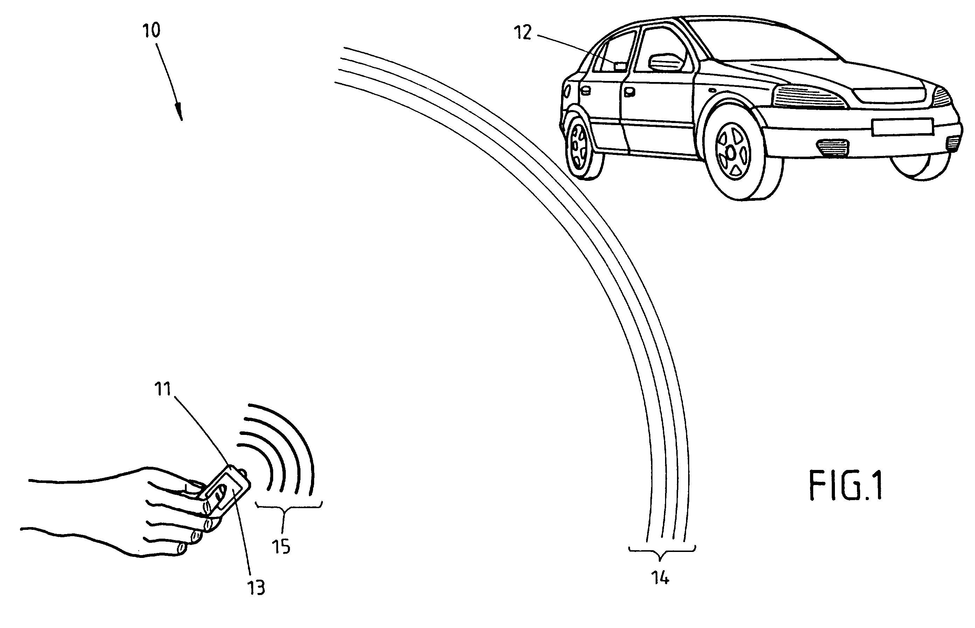

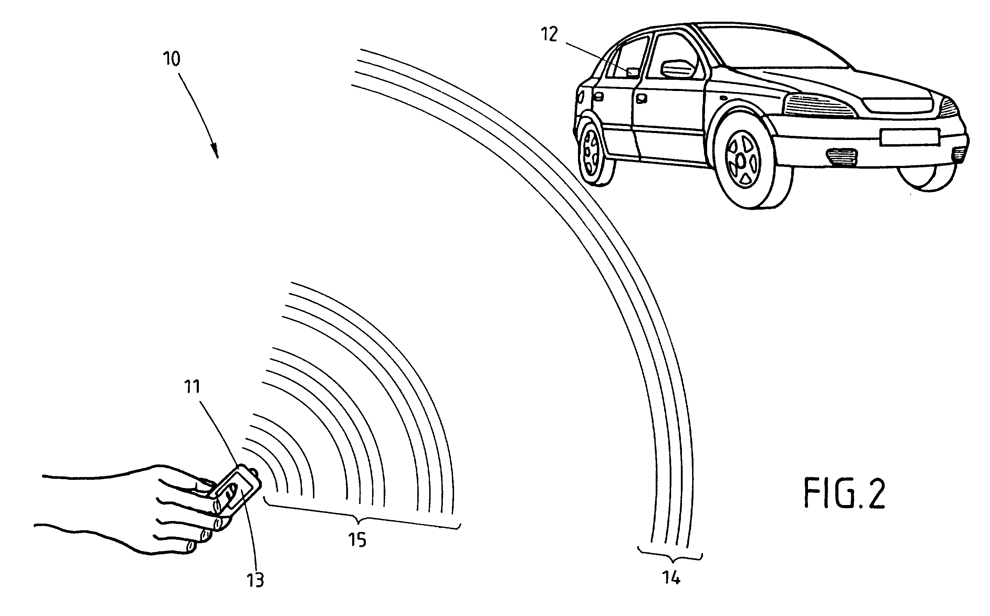

Um für diese Situationen dennoch eine zuverlässige Funkverbindung zur Empfangs-/Decodiereinrichtung am Fahrzeug sicherzustellen, kann am Handsender in die zweite Betriebsart, nämlich die Sonder-Betriebsart gewechselt werden. Diese Sonder-Betriebsart dient, wie Fig. 1 zeigt, zur Übertragung von Sondersignalen 15, die sich beispielsweise durch eine erhöhte Sendeleistung gegenüber den Standardsignalen 14 auszeichnen. Durch diese Maßnahme wird die Wahrscheinlichkeit erhöht, dass trotz der vorliegenden äußeren Störungen auf dem verwendeten Funkkanal das abgegebene Signal 15 den Empfänger 12 am Fahrzeug erreicht. Weitere Möglichkeiten zur Sicherstellung der Funkverbindung zwischen dem Handsender 11 und dem Empfänger 12 bestehen darin, das Sendesignal um ein Vielfaches zu wiederholen und es in Form einer Sendesequenz zum Empfänger 12 zu schicken (Fig. 2). Weitere Möglichkeiten, unter erschwerten Bedingungen die Verbindung des Handsenders 11 mit dem Empfänger 12 herzustellen können auch durch Wechseln der Sendefrequenz oder durch Ändern der Modulationsart, beispielsweise das Ändern von einer impulsmodulierten Übertragung in eine frequenzmodulierte Übertragung verwirklicht werden.

Das Unterscheidungskriterium, wann der Sender von der Standard-Betriebsart für Standardsignale 14 in die Sonder-Betriebsart für Sondersignale 15 wechselt, ist eine spezifische Betätigung des Handsender 11 in einem vorher definierten Zeitfenster. Die Funktionsweise soll hier in einem Beispiel näher erläutert werden. Es soll angenommen werden, dass ein einmaliges Betätigen des Betätigungsschalters 13 ein Verriegeln der Fahrzeugtüren bewirkt. Bei einmaliger Ausführung dieses Bedienerbefehls wird das Standardsignal 14, also mit normaler Sendeleistung ausgesendet. Bei einer Wiederholung dieser Betätigung nach drei Sekunden wird auch das Signal in gleicher Weise ausgesendet. Erfolgt jedoch das zweite Signal bereits nach 1,5 Sekunden also innerhalb eines definierten Zeitfensters von 2 Sekunden, so wechselt der Handsender 11 automatisch in die Sonder-Betriebsart und sendet das entsprechende Sondersignal 15 beispielsweise mit erhöhter Sendeleistung, wie in der Fig. 1 durch die dick gezeichneten Wellenlinien angedeutet, aus.

Um den Energieverbrauch des Handsenders 11 so gering wie möglich zu halten, wird zur Realisierung des Zeitfensters ein energiesparendes RC-Glied verwendet. Hierbei handelt es sich um eine elektronische Schaltung aus Widerständen R und Kondensatoren C, die, als Tiefpass-/Hochpass-Filter geschaltet, eine definierte Systemreaktionszeit vorgeben.

Die Zeitspanne, die zwischen den jeweiligen Betätigungen des Handsenders 11 vergeht, und somit als Indikator für die jeweilige Betriebsart dient, ist individuell einstellbar. So kann der Benutzer das Zeitfenster auch auf beispielsweise 3 Sekunden festlegen. Darüber hinaus bietet der Handsender 11 die Möglichkeit, diese individuellen Einstellungen abzuspeichern, so dass sie ab diesem Zeitpunkt dem Benutzer zur Verfügung stehen.

In der Standard-Betriebsart, die, wie bereits erwähnt, durch Betätigen des Handsenders 11 außerhalb des Zeitfensters aktiviert ist, ist es möglich, neben den Standard-Funktionen, wie Entriegeln der Fahrzeugtüren auch noch zusätzliche Funktionen am Fahrzeug auszuführen. Dies könnte beispielsweise das Ausfahren einer Antenne oder das Aktivieren einer Wegfahrsperre sein.

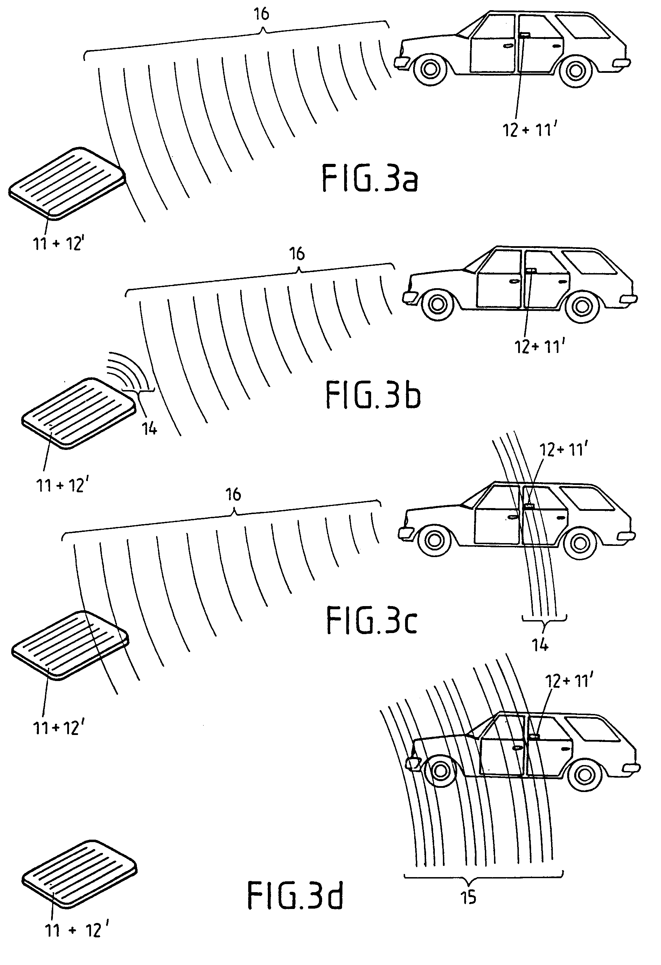

In einem weiteren Ausführungsbeispiel, siehe Fig. 3, ist der Handsender 11 nicht mehr mit einem Betätigungsschalter 13 ausgestattet, sondern weist stattdessen einen zusätzlichen Empfänger 12' auf. Dementsprechend ist dem Empfänger 12 am Fahrzeug ein zusätzlicher Sender 11' zugeordnet. Es gibt somit zwei Sender-/Empfänger-Paare, wobei der Sender des einen Sender-/Empfänger-Paares Signale aussendet, die vom Empfänger des anderen Sender-/Empfänger-Paares empfangen werden kann und umgekehrt. So sendet beispielsweise der Sender 11' im Fahrzeug permanent ein Kennungssignal 16 ab, das von` Empfänger 12' am Handsender 11 empfangen und identifiziert wird (Fig. 2a). Dieses Kennungssignal 16 besitzt nur eine geringe Reichweite, so dass der Handsender 11, der beispielsweise in Form einer Scheckkarte vom Benutzer mit sich getragen wird, erst in unmittelbarer Nähe des Fahrzeuges das Kennungssignal 16 empfängt. Beim Empfang dieses Kennungssignals 16, das beispielsweise im Sekundentakt vom Sender 11' abgegeben wird, sendet der Handsender 11 seinerseits ein Signal 14 zum Empfänger 12. Dadurch authentisiert sich der Träger des Handsenders 11 als rechtmäßiger Benutzer. Dieser Vorgang erfolgt automatisch und in der Standard-Betriebsart (siehe Fig. 3b).

Als Kontrolle, ob das vom Handsender 11 abgegebene Authentisierungssignal 14 tatsächlich beim Empfänger 12 im Fahrzeug angekommen ist, dient der Empfang des Kennungssignals 16. Ist nämlich das Authentisierungssignal 14 empfangen worden, so schaltet der Sender 11' im Fahrzeug das getaktete Kennungssignal 16 ab. Das Ausbleiben dieses Signals 16 ist für den Empfänger 12' am Handsender 11 ein Indiz dafür, dass sein Signal 17 empfangen wurde. Wird das Kennungssignal 16 nach Aussenden des Authentisierungssignals 14 weiterhin vom Empfänger 12' empfangen, wie es in der Fig. 3c angedeutet ist, so wechselt der Handsender 11 automatisch von der Standard-Betriebsart in die Sonder-Betriebsart. Es wird nun ein Authentisierungssignal 15 verwendet, das beispielsweise mit deutlich erhöhter Sendeleistung oder mit einer Vervielfachung des Sendesignals ausgesendet wird (siehe Fig. 3d).

Eine weitere Möglichkeit, die Zuverlässigkeit des Fernbedienungssystems 10 zu erhöhen, besteht darin, wie bereits erwähnt, die Sendefrequenz zu wechseln oder die Modulationsart zu ändern. Entscheidend ist, dass bei diesem Ausführungsbeispiel eine manuelle Betätigung durch den Benutzer nicht mehr notwendig ist. Die Kommunikation zwischen dem Sender-/Empfänger-Paar beim Benutzer und dem Sender-/Empfänger-Paar im Fahrzeug erfolgt in sehr kurzen Abständen und ist vom Benutzer nicht wahrnehmbar.

Es bleibt noch zu bemerken, dass die hier dargestellten Ausführungen nur eine beispielhafte Verwirklichung der Erfindung darstellt. Diese ist jedoch nicht darauf beschränkt. So sind insbesondere andere Formgestaltungen des erfindungsgemäßen Handsenders denkbar, die hier nicht graphisch wiedergegeben worden sind.

### Bezugszeichenliste:

- 10: Fernbedienungssystem
- 11: Handsender
- 11': Sender im Fahrzeug
- 12: Empfänger im Fahrzeug
- 12': Empfänger am Handsender
- 13: Betätigungsschalter von 11
- 14: Signal, Standardsignal, Authentisierungssignal in der Standard-Betriebsart
- 15: Signal, Sondersignal, Authentisierungssignal in der Sonder-Betriebsart
- 16: getaktetes Signal, Kennungssignal von 11'

## Patentansprüche

1. Fernbedienungssystem (10) für Steuereinheiten von Zugangskontrolleinrichtungen, insbesondere für Fahrzeuge, bestehend aus einem Handsender (11) zum Aussenden von codierten Signalen (14) und einem in dem Fahrzeug befindlichen, die Signale empfangenden Empfänger (12),
wobei durch manuelles Betätigen des Handsenders (11) das Signal (14), vorzugsweise ein elektromagnetisches Signal, ausgesendet wird, das der Empfänger (12) zum Ansteuern der Steuereinheiten dekodiert,
dadurch gekennzeichnet,
dass der Handsender (11) mindestens zwei unterschiedliche Betriebsarten aufweist, nämlich neben einer Standard-Betriebsart für Standardsignale (14) mindestens eine Sonder-Betriebsart zur Übertragung von Sondersignalen (15),
wobei in der Sonder-Betriebsart der Sender (14) die Sendeleistung erhöht und/oder die Sendefrequenz wechselt und/oder die Modulationsart ändert
der Handsender (11) jedoch nur dann in die Betriebsart für Sondersignale (15) wechselt, wenn innerhalb eines Zeitfensters dieselbe Betätigung wiederholt wird.

2. Fernbedienungssystem (10) nach Anspruch 1, dadurch gekennzeichnet, dass in der Sonderbetriebsart der Sender (14) das Sendesignal mehrfach wiederholt.

3. Fernbedienungssystem (10) nach einem oder mehreren der Ansprüche 1 bis 2, dadurch gekennzeichnet, dass das Zeitfenster zur Unterscheidung der Betriebsarten durch RC-Glieder realisiert wird.

4. Fernbedienungssystem (10) nach einem oder mehreren der Ansprüche 1 bis 3, dadurch gekennzeichnet, dass das Zeitfenster für den Wechsel in die Sonder-Betriebsart individuell, auf den Benutzer abgestimmt, einstellbar ist.

5. Fernbedienungssystem (10) nach einem oder mehreren der Ansprüche 1 bis 4, dadurch gekennzeichnet, dass die individuellen Einstellungen des Zeitfensters senderseitig speicher- und abrufbar sind.

6. Fernbedienungssystem (10) nach einem oder mehreren der Ansprüche 1 bis 5, dadurch gekennzeichnet, dass bei einer Betätigung des Handsenders (11) außerhalb des Zeitfensters in der Standard-Betriebsart neben Standardfunktionen auch Zusatzfunktionen am Fahrzeug ausgeführt werden.

7. Fernbedienungssystem (10) für Steuereinheiten von Zugangskontrolleinrichtungen, insbesondere für Fahrzeuge, zum Aussenden und Empfangen von codierten Signalen (14), bestehend aus zwei Sender/Empfänger-Einheiten, nämlich einem tragbaren Handsender (11) mit Empfänger (12*'*) und einem in dem Fahrzeug befindlichen, stationären Sender (12) mit zusätzlichem Empfänger (11*'*),
wobei das Signal (14) vorzugsweise ein elektromagnetisches Signal ist,
dadurch gekennzeichnet,
dass der Sender (12) im Fahrzeug ein permanentes, getaktetes Kennungs-Signal (16) aussendet, das vom Empfänger (12*'*) am Handsender (11) empfangbar ist und dieses Kennungs-Signal (16) beim Handsender ein in einer Standard-Betriebsart ausgesendetes der Authentisierung dienendes Standardsignal (14) initialisiert,
dass nur bei Empfang des Authentisierungs-Signals (14) der Sender (11*'*) am Fahrzeug das Aussenden des Kennungs-Signals (16) eingestellt
und dass der Handsender (11) neben der Standard-Betriebsart für die Standardsignale (14) mindestens eine Sonder-Betriebsart zur Übertragung von Sondersignalen (15) aufweist,
wobei in der Sonder-Betriebsart der Sender (11) die Sendeleistung erhöht und/oder die Sendefrequenz wechselt und/oder die Modulationsart ändert,
aber der Sender nur dann in die Sonder-Betriebsart wechselt, wenn nach Aussenden des Authentisierungs-Signals (14) durch den Handsender (11), das kennzeichnende vom Fahrzeug abgegebenes Kennungssignal (16) beim Empfänger (12*'*) des Handsenders (11) weiterhin empfangen wird.
